# EUROPÄISCHE PATENTSCHRIFT

(11) **EP 0 584 733 B1**
(45) Veröffentlichungstag und Bekanntmachung des Hinweises auf die Patenterteilung: **06.11.1996**
(21) Anmeldenummer: 93113324.3
(22) Anmeldetag: 20.08.1993
(51) Int. Cl.: B64D 13/00, F25D 16/00

(54) **Kühlsystem in Luftfahrzeugen**
Cooling device for aircraft
Dispositif de refroidissement pour avion

(30) Priorität: 22.08.1992 DE 4227965; 06.07.1993 DE 4322412
(43) Veröffentlichungstag der Anmeldung: 02.03.1994
(73) Patentinhaber: Daimler-Benz Aerospace Airbus Gesellschaft mit beschränkter Haftung, 21129 Hamburg (DE)
(72) Erfinder: Müller, Hans Jürgen, D-24558 Henstedt-Ulzburg (DE); Schliwa, Ralf, D-20359 Hamburg (DE)
(74) Vertreter: Hansmann, Dierk, Dipl.-Ing.

(56) Entgegenhaltungen:
- EP-A- 0 338 296
- DE-A- 3 824 471
- FR-A- 887 267
- US-A- 3 977 206
- US-A- 4 377 198
- US-A- 4 739 823

## Beschreibung

Die Erfindung bezieht sich auf ein Kühlsystem in Luftfahrzeugen zur Kühlung von Lebensmitteln gemäß dem Gattungsbegriff des Anspruchs 1.

Die DE-A-3 824 471 zeigt einen Kühlraum in einem Flugzeug, die mit Hilfe von Außenluft bei den extrem niedrigen Außentemperaturen während eines Fluges gekühlt wird. Über ein Zuströmkanal wird Stauluft in den Kühlraum geleitet und über ein Rückströmkanal wieder hinausgeführt. Dabei ist in einer Ausgestaltung eine geschlossene Kaltluftführung vorgesehen, bei der die Kälte der Außenluft über einen Wärmetauscher innerhalb des Kühlraumes an die sich in dem Kühlraum befindliche Luft abgegeben wird. Die kalte Außenluft kann in einer weiteren Ausgestaltung jedoch auch direkt in die Kühlkammer geleitet werden. Für die Bodenzeiten zwischen Start und Landung ist innerhalb des Kühlraumes ein Kältespeicher angeordnet. Damit ist aber keine regelbare Kühlung des Kühlraumes über einen längeren Zeitraum hinweg möglich, wie es beispielsweise für eine längere Bodenstandzeit des Flugzeuges notwendig ist.
Ein weiterer Nachteil ergibt sich daraus, daß aufgrund einer platzaufwendigen Anordnung von Bauteilen innerhalb der Kühlkammer, wie Kältespeicher und Wärmetauscher, der Nutzraum der Kühlkammer eingeschränkt ist.
Die gattungsbildende EP-A-0 338 296 zeigt ebenfalls einen Kühlraum innerhalb eines Flugzeuges, der mit Hilfe von Kaltluft aus einer an der Außenhaut angeordneten Kaltluftkammer gekühlt wird. Hierbei wird zwar das zur Flugzeugumgebung bestehende Temperaturgefälle genutzt, aber wenn der Temperaturunterschied zwischen Flugzeugumgebung und Kühlkammer nicht mehr groß genug ist, ist der innerhalb des Kühlraumes vorgesehene Kältespeicher, insbesondere bei langen Bodenstandzeiten, nicht ausreichend. Damit ist auch eine regelbare Kühlung des Kühlraumes nicht erreichbar und die zu lagernden Lebensmittel können leicht verderben.
Die Dokumente US-A-3 977 206 und US-A-4 739 823 zeigen Kühlsysteme in einem Flugzeug, die die Kühlenergie der extrem kalten Außerluft während eines Fluges nutzen. Diese Systeme dienen zur Kühlung von Avionik- bzw. Elektronikkomponenten des Flugzeuges, die beim Betreiben viel Wärme erzeugen, sodaß eine aktive Kühlung notwendig ist, um deren Funktionsfähigkeit jederzeit zu gewährleisten.
In US-A-4 739 823 ist beschrieben, daß sich die an den Elektronikkomponenten erhitzte Luft direkt an einem besonderen, als Wärmetauscher ausgebildeten Strukturteil der Flugzeugzelle abkühlen kann. Der Luftkreislauf wird dabei mittels eines Gebläses aufrecht erhalten.
In US-A-3 977 206 ist ein Kühlsystem offenbart, bei dem Elektronikkomponenten an Kühlplatten befestigt sind. Eine Kühlflüssigkeit durchströmt die Kühlplatten in einem geschlossenen Kreislauf, um Wärme von den Kühlplatten abzutransportieren. Zur Abkühlung der Kühlflüssigkeit sind bei Bedarf Wärmetauscher vorgesehen, die außerhalb der Flugzeugzelle angeordnet sind.
In beiden Dokumenten ist aber nicht offenbart, wie eine Kühlung erfolgen kann, wenn die Außentemperaturen nicht ausreichen, um ausreichend Kühlenergie zur Verfügung zu stellen. Eine Kühlung der Systeme ist aber auch am Boden über einen längeren Zeitraum hinweg notwendig, wenn beispielsweise eine längere Bodenstandzeit des Flugzeuges unter heißen klimatischen Bedingungen auftritt.

Der Erfindung liegt die Aufgabe zugrunde, ein Kühlsystem der eingangs genannten Art zu schaffen, das zu jeder Betriebszeit des Luftfahrzeugs ausreichende, für die Kühlung von Lebensmitteln notwendige Temperaturdifferenzen gewährleistet und den Systemwirkungsgrad erheblich verbessert.

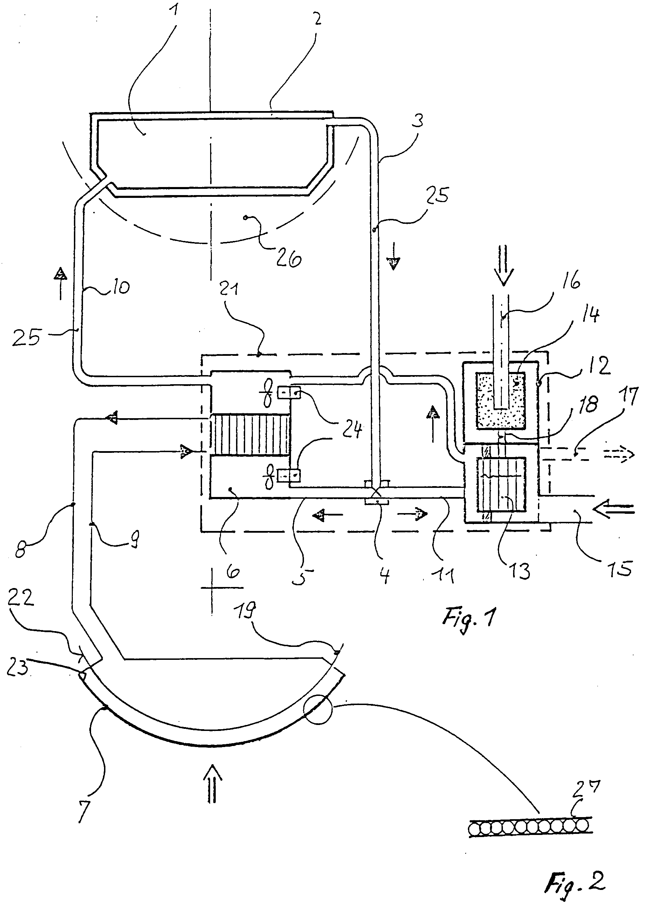

Diese Aufgabe wird durch die im Anspruch 1 aufgezeigten Maßnahmen gelöst. In den Unteransprüchen sind Ausgestaltungen und Weiterbildungen angegeben und in der nachfolgenden Beschreibung sind Ausführungsbeispiele erläutert und in den Figuren 1 bis 6 der Zeichnung skizziert, die die Ausführungsbeispiele in einer schematischen Darstellung (nicht maßstabsgerecht) veranschaulichen.
Fig. 1 ein Kühlsystem mit einer ersten Ausgestaltung der Kühleinrichtung,
Fig. 2 einen Querschnitt durch den Flächenkühler,
Fig. 3 ein Kühlsystem mit einer zweiten Ausgestaltung der Kühleinrichtung,
Fig. 4 ein Kühlsystem mit einer dritten Ausgestaltung der Kühleinrichtung,
Fig. 5 ein Kühlsystem mit einer vierten Ausgestaltung der Kühleinrichtung
und
Fig. 6 ein Kühlsystem mit einer fünften Ausgestaltung der Kühleinrichtung.

Die Fign. 1 und 2 zeigen eine Ausbildung eines Kühlsystems. Mit 1 ist dabei ein Kühlraum bezeichnet, der in den nachfolgend beschriebenen Ausführungsbeispielen ein im Unterflurbereich 26 des Flugzeugrumpfes 19 einfahrbarer Catering-Container ist, der nachfolgend CC bezeichnet wird. In dem CC sind entweder in Trolleys oder in Behältern oder diversen Verpackungsschachteln die Lebensmittel für den Passagierservice gelagert und dort zu kühlen. Hierzu ist nun ein Kühlsystem vorgesehen, das sich aus einer modular aufgebauten Kühleinrichtung 21 und einem in bestimmtem Abstand von der Außenhaut des Flugzeugrumpfes 19 befestigten Flächenkühler 7 zusammensetzt und über Zuführleitung 10 und Rückführleitung 3 mit dem als Kühlbox dienenden CC 1 verbunden ist. Die Kühleinrichtung 21 steht über eine Kühlmediumzuleitung 9 und eine Kühlmediumableitung 10 mit dem Flächenkühler 7 in Verbindung.

Der Flächenkühler 7 wird durch Spezialverschlüsse und Abstandshalter in einem bestimmten Abstand von der Rumpfzelle 19 strömungsgünstig fixiert, ist jedoch schnell und problemlos überprüf- und auswechselbar. Die beiden einander zugekehrten Flächen von Flächenkühler 7 und Außenhaut der Rumpfzelle 19 sind mit einer korrosionsgeschützten Spiegelschicht 22, 23 versehen. Dadurch wird ein unerwünschter Wärmeübergang stark minimiert und damit das flüssige Kühlmedium beispielsweise Methanol mit einem größtmöglichen Wirkungsgrad durch die angeordneten Kapillar-Röhrchen 27 geleitet und dabei abgekühlt.

Das abgekühlte Medium gelangt dann über die Kühlmedium-Zuleitung 9 in den Wärmetauscher 6 als erstes Modul der Kühleinrichtung 2 und nimmt hier aus der durch Gebläse 24 geförderten Luft 25 aus dem CC 1 stammende Wärme auf, um anschließend wieder per Kapillar- bzw. Schwerkraftwirkung über die Kühlmediumableitung 8 in die Kühlfläche 7 zurückzufließen und einen neuen Umlaufzyklus zu starten.
Zur Aufrechterhaltung des Temperaturunterschiedes zwischen dem Flugzeuginnenraum 26 und dem Innenraum des CC 1 ist das zweite Modul der Kühleinrichtung 21 vorgesehen, das in dieser ersten Ausgestaltung als Zeolithkühler 12 ausgebildet ist. Dieser tritt sofort in Wirkung, wenn die Außenkühlfläche 7 am Rumpf durch die abnehmende Flughöhe keine entsprechende Temperaturdifferenz mehr liefern kann und nun hier ohne zusätzliche Hilfsgeräte wie bisher erforderlich die weitere Versorgung mit einer Kühlleistung übernimmt, indem durch Verdampfen von Wasser in dem Verdampfer 13 sich dieses Wasser als Wasserdampf in dem Behälter 14, der mit der Zeolithfüllung versehen ist, absetzt und so dem Wasserreservoir die Wärme entzieht, bis zu einem einstellbaren Zeitpunkt die Zeolithfüllung wieder durch Wärmezugabe vom Wasserdampf befreit ist und ein neuer Zyklus einsetzen kann. Es ist auch denkbar, daß die zum Betrieb des Kühlsystems erforderliche Wärme einem von einem Triebwerk kommenden Zapfluftstrom entnommen oder durch eine Heizpatrone bereitgestellt wird. Die beiden Behälter 13 und 14 sind als Vakuumbehälter ausgelegt und durch ein Ventil 18 getrennt. Wird dieses Ventil 18 geöffnet, so beginnt der neue Zyklus.

Die Zuleitung 15 ist als Vorlauf-Zuleitung anzusehen, die Warmluft zuführt, wenn das Flugzeug abgestellt ist oder zum Start vorbereitet wird. Sie ist mit einem Ventil versehen und mit dem Regelkreis der Anlage 21 verbunden und führt über die Ableitung 17 und ein dieser Leitung zugeordnetes nicht gezeigtes Ventil Restwärme nach außen.

Alle Bauelemente und Module der Kühleinrichtung 21 sind in einem Gehäuse zusammengefaßt, das mit Schnellverschlussen im Unterflurbereich 26 des Flugzeugrumpfes 19 integriert und dadurch leicht zugänglich, wartbar und auswechselbar ist. Der Kühleinrichtung 21 sind zweckdienliche Sensoren und elektrische Regelkreise für die Wärmezuführung und Kühlleistung zugeordnet.
Die gekühlte Luft 25 aus dem Zeolithkühler 12 wird direkt in den CC 1 geleitet und hier die vorgekühlten Lebensmittel entsprechend der Kühlleistung auf dem geforderten Temperatur-Niveau gehalten.

Als zusätzliche Isolierung des CC wird dieser mit einer Doppelwandung ausgestattet und der so zusätzlich entstehende Hohlraum als Trinkwasser-Behälter 2 genutzt. Er nimmt aus dem inneren Container-Volumen flächenmäßig die anfallende Restwärme auf, die nicht dem normalen Strömungsverlauf der Kühlluft 25 unterliegt und gibt sie dem Trinkwasser weiter.

Der Transport des Kühlmediums kann vorteilhaft auch durch eine Pumpe von geeigneter Bauart erfolgen. Dabei ist die Anwendung der Pumpe sowohl zusätzlich zur als auch anstelle der Kapillarwirkung denkbar.

Zur Erläuterung seien nachstehend die Temperaturen dieses Ausführungsbeispiels in einem Arbeitszyklus wiedergegeben:

| | | |
|---|---|---|
| T1 | Temperatur der Kühlbox 1 | = + 8 °C |
| T2 | Temperatur im Frischwassertank 2 | = + 10 °C |
| T3 | Temperatur der Kühlbox-Warmluft | = + 15 °C |
| T5 | Temperatur in der Warmluftleitung 5 | = + 14 °C |
| T7 | Temperatur im Außenhautkühler 7 | = + 8,50°C bis -56 °C |
| T10 | Temperatur der Kühlluft 25 | = 0 °C |
| T13 | Temperatur zur Verdampfung im Verdampfer 13 | = + 4 °C bis 0 °C |
| T15 | Temperatur in der Zuleitung 15 | = + 20 °C bis + 80 °C |
| T16 | Temperatur in der Zuleitung 16 | = + 300 °C. |

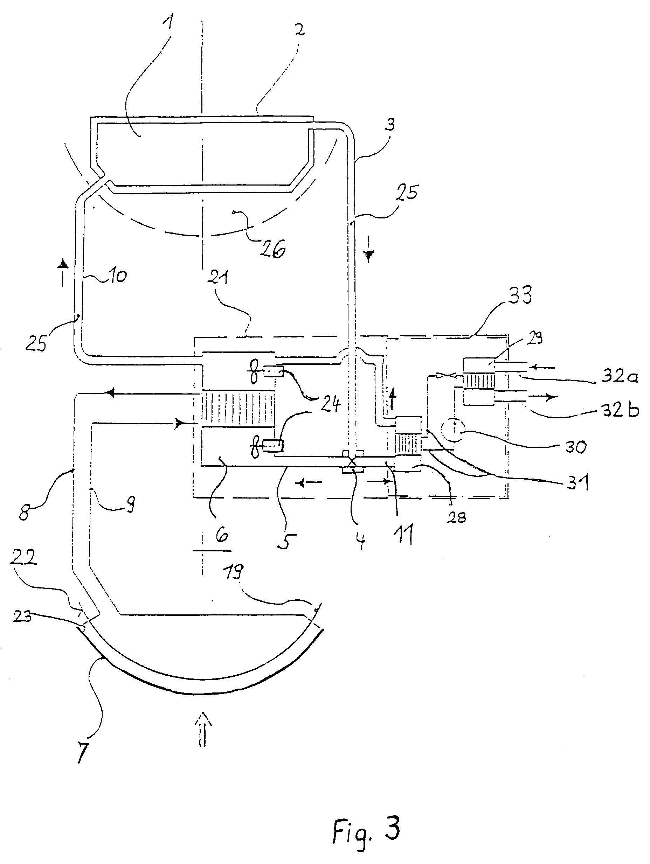

In der Fig. 3 ist ein Kühlsystem mit einer zweiten Ausgestaltung der Kühleinrichtung 21 ersichtlich. Die restliche Anordnung entspricht im wesentlichen dem in Fig. 1 beschriebenen Kühlsystem.
Zur Aufrechterhaltung des Temperaturunterschiedes zwischen dem Flugzeuginnenraum 26 und dem Innenraum des Kühlraumes 1 ist das zweite Modul der Kühleinrichtung 21 als Kompressionskältemaschine 33 ausgebildet. Diese tritt in Wirkung, wenn die Außenkühlfläche 7 am Rumpf durch die abnehmende Flughöhe keine entsprechende Temperaturdifferenz mehr liefern kann und nun die Kompressionskältemaschine 21 die weitere, wesentliche Versorgung mit eine Kühlleistung übernimmt.
Die Kompressionskältemaschine 33 ist mittels eines Schaltventils 4 zuschaltbar angeordnet, wobei ein Verdampfer 28, ein Verdichter 30 und ein Kondensator 29 einen Kreislauf bilden und über eine Kältemittelleitung 31 miteinander verbunden sind. Das Kältemittel aus der Kältemittelleitung 31 stellt am Verdampfer 28 Kühlenergie zur Verfügung, die den Kühlkreislauf zur CC 1 aufrecht erhält. Anschließend wird das Kältemittel im Verdichter 30 komprimiert und über den Kondensator 29 geführt. Am Kondensator 29 wird dem Kältemittel Wärme entzogen, indem es flüssigkeits- oder luftgekühlt wird. Das gekühlte Kältemittel wird über die Kältemittelleitung 31 zurück zum Verdampfer 28 geführt.
Der Kondensator 29 ist mit einer Kühlleitung 32 zur Zuführung von Kühlenergie zur Kühlung des Kältemittels verbunden. Die Kühlleitung 32 besteht im wesentlichen aus einer Zustromleitung 32a und einer Abstromleitung 32b und ist über diese Leitungen 32a und 32b mit einem hier nicht dargestellten Kühlflüssigkeitsbehälter, vorzugsweise mit dem Flächenkühler 7, verbunden.
Das Kühlmedium aus dem Flächenkühler 7 strömt somit im Betriebsfall der Kältekompressionsmaschine 33 nicht zum Wärmetauscher 6, sondern über die Zustromleitung 32a zum Kondensator 29.
Dabei ist von Vorteil, daß das Kühlmedium vom Flächenkühler 7 für die Kühlung des Kältemittels in der Kompressionskältemaschine 33 noch eine ausreichende Kühlleistung zur Verfügung stellt, wenn auch die Temperaturdifferenz für eine ausreichende Kühlung der CC 1 nicht mehr ausreicht.

Eine alternative Möglichkeit zur Zuführung von Kühlenergie zum Kondesator 29 ist mit einer hier nicht dargestellten Verbindung der Kühlleitung 32 mit einem Raum im Flugzeug, vorzugsweise dem unbeheizten Unterflurraum, und/oder der FZ-Umgebung realisierbar. Ein Luftstrom, insbesondere ein Luftstrom aus dem Unterflurraum und/oder ein Außenluftstrom, strömt zum Kondensator 29 über die Zustromleitung 32a und wird über die Abstromleitung 32b abgeführt.
Eine Kühlung des Kältemittels im Kondensator 29 ist somit mit vorhandenen, nicht aufwendigen Mitteln durchführbar.
Die gekühlte Luft 25 aus dem zweiten Modul der Kühleinrichtung 21, der Kompressionskältemaschine 33, wird über die Leitung 10 direkt in den CC 1 geleitet und hier werden die vorgekühlten Lebensmittel entsprechend der Kühlleistung auf dem geforderten Temperatur-Niveau gehalten.

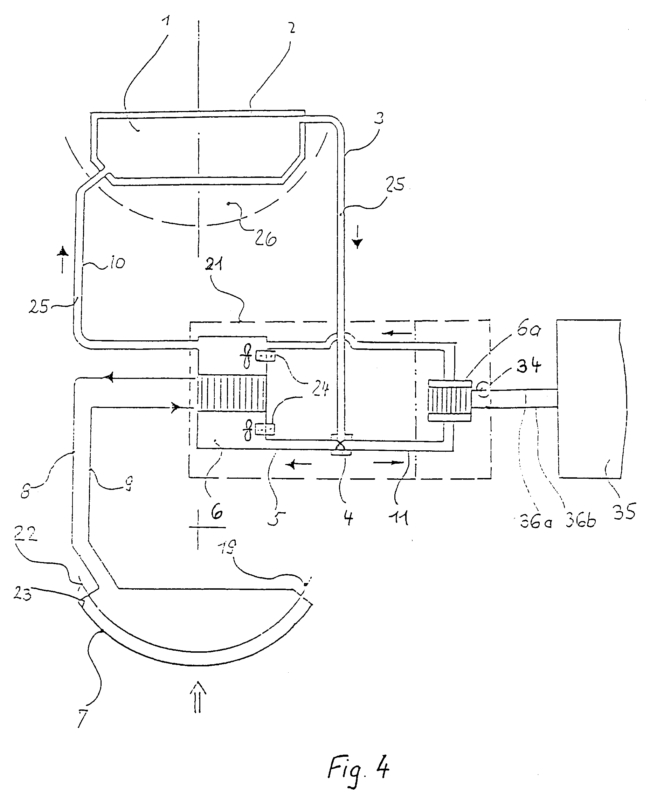

In der Fig. 4 ist ein Kühlsystem mit einer dritten Ausgestaltung der Kühleinrichtung 21 ersichtlich. Die restliche Anordnung entspricht im wesentlichen dem in Fig. 1 beschriebenen Kühlsystem. Die Module der Kühleinrichtung 21 sind in dieser Ausgestaltung der Wärmetauscher 6 als erster Wärmetauscher und ein zweiter Wärmetauscher 6a, wobei der zweite Wärmetauscher 6a mit einer Klimaanlage 35 über eine Zuleitung 36a und über eine Ableitung 36b verbunden ist. Der zweite Wärmetauscher 6a ist mittels eines Schaltventils 4 zuschaltbar angeordnet, wenn keine ausreichende Kühlleistung vom Flächenkühler 7 zur Verfügung gestellt wird und mittels einer Pumpe 34 wird das Kühlmedium für den Wärmetauscher 6a aus einer Wärmesenke der Klimaanlage 35 herangeführt. Die Luft aus dem CC 1 wird über den Wärmetauscher 6a geführt, diese gibt Wärmeenergie an das Kühlmedium ab und die gekühlte Luft 25 wird über die Leitung 10 dem CC 1 zugeführt.

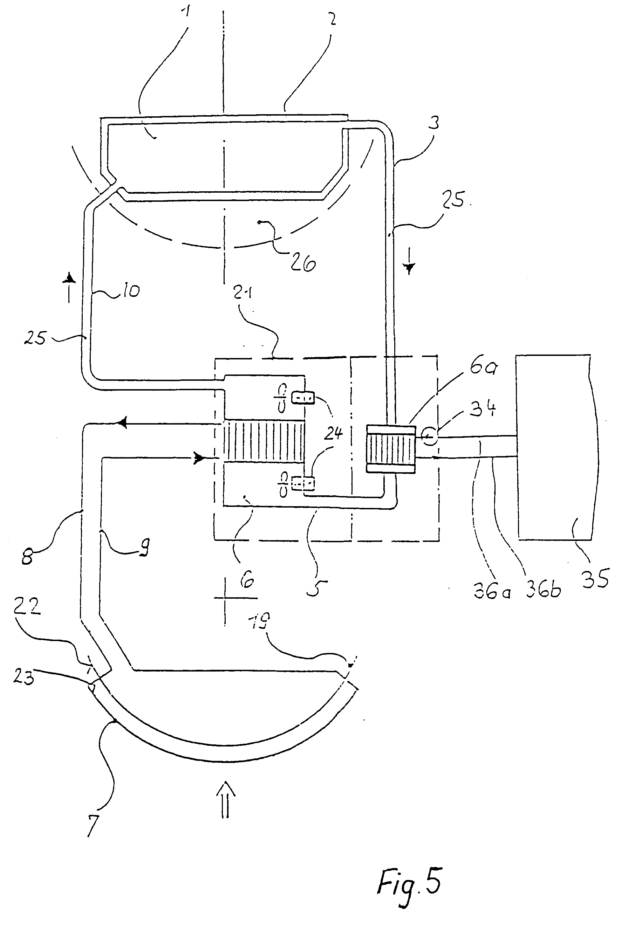

In Fig. 5 ist eine alternative, vierte Ausgestaltungsform der Kühleinrichtung 21 mit dem zweiten Wärmetauscher 6a ersichtlich. In dieser Form ist der zweite Wärmetauscher 6a in der Leitung 3 von der CC 1 zum ersten Wärmetauscher 6 angeordnet. Das Zuschalten der Kühlleistung des zweiten Wärmetauschers 6a bei Ausfall bzw. Verringerung der Kühlleistung des Flächenkühlers 7 ist mit der Pumpe 34 zur Zuführung des Kühlmediums aus der Klimaanlage 35 möglich.
Da der Luftstrom 25 nicht umgeleitet wird, ist ein Betreiben der Kühleinrichtung 21 gleichzeitig mit beiden Modulen vorstellbar. Mit dem einfachen Aufbau ist gleichzeitig ein für den Flugzeugbau immer geltendes Erfordernis einer Gewichtseinsparung und einer hohen Zuverlässigkeit erreicht.

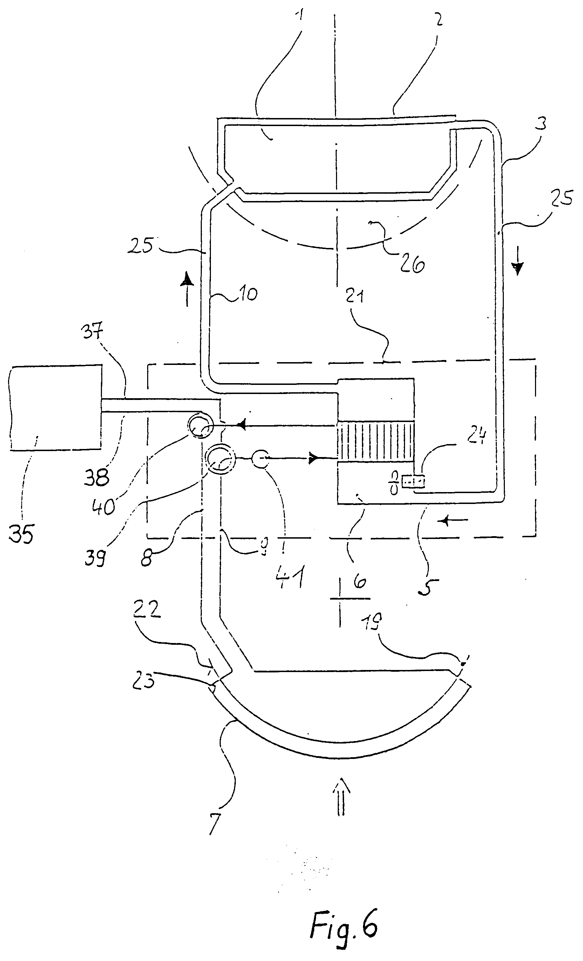

In der Fig. 6 wird ein Kühlsystem mit einer fünften Ausgestaltung der Kühleinrichtung 21 dargestellt. Die Anordnung entspricht im wesentlichen dem in Fig. 1 beschriebenen Kühlsystem. Die als Wärmetauscher 6 ausgebildete Kühleinrichtung 21 ist ein Wärmetauscher, der einerseits über die Kühlmediumleitungen 8, 9 mit dem Flächenkühler 7 verbunden ist und andererseits über Kühlmittelleitungen 37, 38 eine Verbindung zur Klimaanlage 35 besitzt. Bei Ausfall der Kühlleistung des Flächenkühlers 7 ist der Wärmetauscher 6 umschaltbar von den Kühlmedium Leitungen 8, 9 vom Flächenkühler 7 auf die Kühlmittelleitungen 37, 38 von einer Wärmesenke aus der Klimaanlage 35. Die erste Kühlmittelleitung 37 ist über ein erstes Schaltventil 39 mit der Zuleitung 9 verbunden und die zweite Kühlmittelleitung 38 ist über ein zweites Schaltventil 40 mit der Ableitung 8 verbunden. Bei ungenügenden Kühlleistung des Außenflächenkühlers 7 werden die Schaltventile 39 und 40 umgestellt und stellen mit den Leitungen 37 und 38 eine Verbindung zur Klimaanlage 35 her. Das Kühlmittel aus einer Wärmesenke der Klimaanlage 35 fließt dann zum Wärmetauscher 6, nimmt von der aus dem Kühlraum strömenden Luft 25 Wärmeenergie auf und wird wieder zurückgeführt.
Der Strom der Kühlluft 25 aus dem CC 1 wird mit dem Umschalten des Kühlmittelflusses vom Flächenkühler 7 zur Klimaanlage 35 nicht geändert. In beiden Fällen wird die Luft über den Wärmetauscher 6 geleitet, an dem ein Wärmeentzug erfolgt.
Mit der Nutzung der Klimaanlage 35 ist ein schon im Luftfahrzeug vorhandenes System vorteilhaft zur Kühlung von Lebensmitteln für den Passagierservice verwendbar.

## Patentansprüche

1. Kühlsystem in Luftfahrzeugen zur Kühlung von Lebensmitteln für den Passagierservice in einem Kühlraum (1), wobei diese Anordnung einen im wesentlichen geschlossenen, aus Zuführleitung (10), Rückführleitung (3) und Wärmetauscher (6) bestehenden Kühlraumkreislauf bildet, der von Kühlluft durchströmt wird, wobei der Wärmetauscher (6) über die Zuführleitung (10) und die Rückführleitung (3) mit dem Kühlraum (1) in Verbindung steht, **dadurch gekennzeichnet, daß** eine aus Modulen bestehende Kühleinrichtung (21) innerhalb der Flugzeugzelle (19) austauschbar angeordnet ist, mindestens ein Modul der Kühleinrichtung (21) der Wärmetauscher (6) ist, der mit einer Kühlmediumableitung (8), einer Kühlmediumzuleitung (9) und einem, im bestimmten Abstand zur Flugzeugzelleaußenhaut (19) angeordneten Flächenkühler (7) einen Flächenkühlerkreislauf bildet, der von einem flüssigen Kühlmedium durchströmt wird, und ein weiteres Modul der Kühleinrichtung (21) als Kühlaggregat ausgebildet ist, das bei Ausfall der Kühlleistung des Flächenkühlers (7) zuschaltbar ist.

2. Kühlsystem nach Anspruch 1,
**dadurch gekennzeichnet,** daß das Kühlaggreagt als Zeolithkühler (12) ausgebildet ist, der mittels im Flugzeug vorhandene Wärmequellen, beispielsweise Bleed-air oder Heizpatrone, aktivierbar ist und beim Zuschalten des Zeolithkühlers (12) der Kühlluftstrom (25) über den Zeolithkühler (12) leitbar ist.

3. Kühlsystem nach Anspruch 1,
**dadurch gekennzeichnet,** daß das Kühlaggregat als luftgekühlte Kompressionskältemaschine (33) ausgebildet ist, wobei beim Zuschalten der Kompressionskältemaschine (33) der Kühlluftstrom (25) über einen Verdampfer (28) leitbar ist.

4. Kühlsystem nach Anspruch 1,
**dadurch gekennzeichnet,** daß das Kühlaggregat als Kompressionskältemaschine (33) ausgebildet ist, die über eine Kühlleitung (32) mit einem Kühlflüssigkeitsbehälter, vorzugsweise mit dem Flächenkühler (7), verbunden ist und mit einem flüssigen Kühlmedium durchströmbar ist, wobei beim Zuschalten der Kompressionskältemaschine (33) der Kühlluftstrom (25) über einen Verdampfer (28) leitbar ist.

5. Kühlsystem nach Anspruch 1,
**dadurch gekennzeichnet,** daß das Kühlaggregat als zweiter Wärmetauscher (6a) ausgebildet ist, über den nach dem Zuschalten der Kühlluftstrom (25) strömt und der mit einer Klimaanlage (35) über eine Zuleitung (36a) und über eine Ableitung (36b) verbunden ist.

6. Kühlsystem nach Anspruch 1,
**dadurch gekennzeichnet,** daß Kühlmittelleitungen (37, 38), die von einer Wärmesenke aus der Klimaanlage (35) gespeist werden, das Kühlaggregat bilden, auf die der Wärmetauscher (6) bei Ausfall der Kühlleistung des Flächenkühlers (7) umschaltbar ist.

7. Kühlsystem nach einem der Ansprüche 1 bis 6,
**dadurch gekennzeichnet,** daß der Flächenkühler (7) und die Rumpfaußenhaut der Flugzeugzelle (19) auf den einander zugekehrten Seitenflächen mit je einer korrosionsgeschützten Spiegelfläche (22, 23) versehen sind.

8. Kühlsystem nach einem der Ansprüche 1 bis 7,
**dadurch gekennzeichnet,** daß der Flächenkühler (7) außerhalb der Flugzeugzelle (19) angeordnet ist und entsprechend der Rumpfform der Zelle (19) an seinem Anbringungsort geformt ist sowie mit kapillaren Röhrchen (27) für das flüssige Kühlmedium versehen ist.

9. Kühlsystem nach einem der Ansprüche 1 bis 8,
**dadurch gekennzeichnet,** daß die Kühleinrichtung (21) containerartig ausgebildet ist und mit Schnellverschlüssen für die auswechselbare Befestigung im Unterflurbereich der Flugzeugzelle (19), sowie mit Sensoren und elektronischen Regelkreisen für die Wärmezuführung und Kühlleistung versehen ist.

10. Kühlsystem nach einem der Ansprüche 1 bis 9,
**dadurch gekennzeichnet,** daß der Kühlraum (1) zur besseren Temperaturhaltung doppelwandig ausgebildet ist und der zwischen beiden Wandungen liegende Raum als Frischwassertank (2) ausgebildet ist.

## Claims

1. Cooling system in aircraft for cooling foodstuffs for the passenger service in a cold store (1), whereby this arrangement forms a substantially closed cold-store circuit consisting of supply line (10), return line (3) and heat exchanger (6) through which cooling air flows, whereby the heat exchanger (6) is linked to the cold store (1) via the supply line (10) and the return line (3), **characterised in that** a cooling device (21) consisting of modules is arranged interchangeably within the airframe (19) of the aircraft, at least one module of the cooling device (21) is the heat exchanger (6) which with a coolant drainage line (8), a coolant feed line (9) and a panel cooler (7) arranged at a certain distance from the outer skin of the airframe (19) of the aircraft constitutes a panel-cooler circuit through which a fluid coolant flows and an additional module of the cooling device (21) takes the form of a cooling unit which can be connected up in the event of loss of refrigerating capacity of the panel cooler (7).

2. Cooling system according to Claim 1,
**characterised in that** the cooling unit takes the form of a zeolite cooler (12) which is capable of being activated by means of heat sources that are present in the aircraft, for instance bleed-air or heating cartridge, and when the zeolite cooler (12) is connected up the current of cooling air (25) can be conducted across the zeolite cooler (12).

3. Cooling system according to Claim 1,
**characterised in that** the cooling unit takes the form of an air-cooled compression refrigerating machine (33), whereby when the compression refrigerating machine (33) is connected up the current of cooling air (25) can be conducted across an evaporator (28).

4. Cooling system according to Claim 1,
**characterised in that** the cooling unit takes the form of a compression refrigerating machine (33) which is connected via a cooling line (32) to a cooling-fluid reservoir, preferably to the panel cooler (7), and through which a fluid coolant can flow, whereby when the compression refrigerating machine (33) is connected up the current of cooling air (25) can be conducted across an evaporator (28).

5. Cooling system according to Claim 1,
**characterised in that** the cooling unit takes the form of a second heat exchanger (6a) which after it is connected up has the current of cooling air (25) flow across it and which is connected to an air-conditioning unit (35) via a feed line (36a) and via a drainage line (36b).

6. Cooling system according to Claim 1,
**characterised in that** coolant lines (37, 38) which are supplied by a heat sink from the air-conditioning unit (35) constitute the cooling unit to which the heat exchanger (6) can be switched over in the event of loss of refrigerating capacity of the panel cooler (7).

7. Cooling system according to one of Claims 1 to 6,
**characterised in that** the panel cooler (7) and the outer skin of the fuselage of the airframe (19) are each provided on the lateral faces facing each other with a mirror surface (22, 23) which is protected against corrosion.

8. Cooling system according to one of Claims 1 to 7,
**characterised in that** the panel cooler (7) is arranged outside the airframe (19) of the aircraft and is shaped at its mounting location in accordance with the shape of the fuselage of the airframe (19) and is also provided with capillary tubes (27) for the fluid coolant.

9. Cooling system according to one of Claims 1 to 8,
**characterised in that** the cooling device (21) is designed in the form of a container and is provided with quick-acting catches for interchangeable attachment in the underfloor region of the airframe (19) of the aircraft and also with sensors and electronic control loops for the supply of heat and for the refrigerating capacity.

10. Cooling system according to one of Claims 1 to 9,
**characterised in that** the cold store (1) is of double-walled construction for better maintenance of temperature and the space located between the two walls takes the form of a freshwater tank (2).

## Revendications

1. Système de refroidissement dans les aéronefs destiné à refroidir les aliments pour le service des passagers dans une chambre froide (1), ledit dispositif formant un circuit de la chambre froide principalement fermé composé d'une conduite d'alimentation (10), d'une conduite de retour (3) et d'un échangeur thermique (6), et traversé par de l'air de refroidissement, ledit échangeur thermique (6) étant connecté à la chambre froide (1) par l'intermédiaire de la conduite d'alimentation (10) et la conduite de retour (3), **caractérisé en ce que** un dispositif de refroidissement (21) composé de modules est disposé de manière à pouvoir être échangé à l'intérieur de la cellule d'avion (19), au moins un module du dispositif de refroidissement (21) constitue l'échangeur thermique (6) qui, avec une conduite de retour de l'agent de refroidissement (8), une conduite d'amenée de l'agent de refroidissement (9) et un refroidisseur à surface étendue (7) disposé à une distance déterminée de la paroi externe de la cellule d'avion (19), forme un circuit du refroidisseur à surface étendue qui est traversé par un agent de refroidissement liquide, et un autre module du dispositif de refroidissement (21) est conçu comme un groupe frigorifique pouvant être mis en circuit en cas de défaillance de la puissance frigorifique du refroidisseur à surface étendue (7).

2. Système de refroidissement selon la revendication 1, caractérisé en ce que le groupe frigorifique est conçu comme un refroidisseur à zéolithe (12) qui peut être activé au moyen de sources de chaleur présentes dans l'avion, par exemple le Bleed-air ou la cartouche chauffante, et lors de la mise en circuit du refroidisseur à zéolithe (12), le flux d'air de refroidissement (25) peut être conduit par le refroidisseur à zéolithe (12).

3. Système de refroidissement selon la revendication 1, caractérisé en ce que le groupe frigorifique est conçu comme une machine frigorifique à compression (33), le flux d'air de refroidissement (25) lors de la mise en circuit de la machine frigorifique à compression (33) pouvant être guidé par un vaporisateur (28).

4. Système de refroidissement selon la revendication 1, caractérisé en ce que le groupe frigorifique est conçu comme une machine frigorifique à compression (33) connectée par l'intermédiaire d'une conduite de refroidissement (32) à un réservoir de liquide de refroidissement, préférentiellement au refroidisseur à surface étendue (7) et qui peut être traversé par un agent de refroidissement liquide, le flux d'air de refroidissement (25) lors de la mise en circuit de la machine frigorifique à compression (33) pouvant être guidé par un vaporisateur (28).

5. Système de refroidissement selon la revendication 1, caractérisé en ce que le groupe frigorifique est conçu comme un deuxième échangeur thermique (6a) par lequel s'écoule le flux d'air de refroidissement après la mise en circuit et qui est connecté à une installation de conditionnement d'air (35) par l'intermédiaire d'une conduite d'amenée (36a) et d'une conduite de retour (36b).

6. Système de refroidissement selon la revendication 1, caractérisé en ce que les conduites à agent réfrigérant (37, 38), qui sont alimentées à partir de l'installation de conditionnement d'air (35) par une source thermique, forment le groupe frigorifique, sur lequel peut être commuté l'échangeur thermique (6) en cas de défaillance de la puissance frigorifique du refroidisseur à surface étendue (7).

7. Système de refroidissement selon la revendication 1 caractérisé en ce que le refroidisseur à surface étendue (7) et la paroi externe du fuselage de la cellule d'avion (19) sont pourvus, sur les faces latérales tournées l'une vers l'autre, d'une surface réfléchissante anticorrosive (22, 23).

8. Système de refroidissement selon l'une ou l'autre des revendications 1 à 7, caractérisé en ce que le refroidisseur à surface étendue (7) est disposé à l'extérieur de la cellule d'avion (19) et est adapté, conformément à la forme du fuselage de la cellule (19) à son lieu d'attache, de même qu'il est pourvu de tubes capillaires (27) pour l'agent de refroidissement liquide.

9. Système de refroidissement selon l'une ou l'autre des revendications 1 à 8, caractérisé en ce que le dispositif de refroidissement (21) est conçu comme un conteneur et est pourvu de fermetures rapides pour la fixation amovible dans la zone sous le plancher de la cellule d'avion (19), ainsi que de détecteurs et de circuits de réglage électroniques pour l'amenée de chaleur et la puissance frigorifique.

10. Système de refroidissement selon l'une ou l'autre des revendications 1 à 9, caractérisé en ce que la chambre froide (1), pour une meilleure retenue de la chaleur, est conçue avec une double paroi et l'espace compris entre les deux parois est conçu comme un réservoir d'eau fraîche (2).
